# EUROPEAN PATENT APPLICATION

(11) **EP 4 749 182 A1**
(43) Date of publication of application: **27.05.2026**
(21) Application number: 24215186.8
(22) Date of filing: 25.11.2024
(51) Int. Cl.: F21V 8/00, B60Q 3/208, B60Q 3/51, B60Q 3/64

(54) **SERVICEABLE LED ARRAY FOR A TRANSPARENT VEHICLE ROOF ASSEMBLY**

(71) Applicant: Inalfa Roof Systems Group B.V., 5807 GW Oostrum (NL)
(72) Inventor: VAN DOLEWEERD, Theodorus, 5807 GW OOSTRUM (NL); SWINKELS, Diederik Gijsbertus, 5807 GW OOSTRUM (NL); HOEIJMAKERS, Hans Hubertus, 5807 GW OOSTRUM (NL)
(74) Representative: De Vries & Metman

(57) **Abstract**

The present invention relates to a transparent roof panel assembly for a vehicle comprising a panel, a light source and a light in-coupling element wherein the light source is provided in a serviceable manner. The invention further relates to a method for attaching and removing said light source, and a vehicle comprising said transparent roof panel assembly.

## Description

The present invention relates to a transparent roof panel assembly for a vehicle comprising a panel, a light source and a light in-coupling element for coupling light into the panel wherein the light source is provided in a serviceable manner. The invention further relates to a method for attaching and removing said light source, and a vehicle comprising said transparent roof panel assembly.

### BACKGROUND

A transparent roof assembly for a vehicle is generally known. For example, a glass panel is arranged over an opening in the roof of a vehicle to allow sunlight to enter an interior of the vehicle through the roof. In a known transparent roof assembly, the at least partly transparent panel is fixedly arranged over the opening, while in another known transparent roof assembly the panel is moveably arranged. In particular, the moveably arranged panel may be tiltable and/or slidable.

Further, it is known to arrange a light source in a vicinity of an edge of the, at least partly, transparent panel such that light emitted by the light source is injected into the panel and the light propagates through the panel, wherein the panel functions as a light guide. The light may, for instance, be injected from a side portion of the panel or from a bottom or top portion of the panel. In order to direct the light into the interior of the vehicle, light outcoupling structures may be provided on a surface area of the panel.

The light source may be an assembly of light emitting diode (LED) packages or LED dies arranged on a rigid or flexible printed circuit board (PCB). Such an assembly is also known as an LED array or a LED strip. In a transparent roof assembly, the LED array may be configured to directly illuminate the panel or illuminate the panel via an in-coupling element. The in-coupling element may be a transparent member made of plastic, such as polymethyl methacrylate (PMMA) or polycarbonate (PC), having a rectangular, triangular, trapezoidal or parallelepiped wedge or prism-shape. The in-coupling element may, alternatively or additionally, comprise an optical clear adhesive (OCA) shaped to realize any suitable in-coupling shape.

The LED array is typically attached to the, at least partly, transparent panel and/or to the in-coupling element by means of an adhesive or a double-sided adhesive tape. This ensures a stable and accurate positioning of the LED array in relation to the panel or in-coupling element. However, when the LED array has to be serviced due to, for instance, a failing LED component or faulty driving controller on the LED array, the adhesive or double-sided adhesive tape has to be removed. This may be done by heating or dissolving the adhesive, but as such is not hassle free. Moreover, upon reinstalling the LED array or installing a new LED array by a servicing technician, accurate positioning may no longer be guaranteed. When the LED array is positioned inaccurately, the observable light pattern or performance may be negatively impacted.

### SUMMARY OF INVENTION

It is therefore an object of the invention to provide an LED array for a transparent vehicle roof assembly which guarantees an accurate positioning upon servicing.

This is achieved by providing a transparent roof panel assembly for a vehicle roof wherein the roof panel assembly comprises a panel having a transparent area, the panel being configured to be arranged over an opening in the vehicle roof to allow visible light to pass through the transparent area between an exterior of the vehicle and an interior of the vehicle, a light source arranged for providing light into the panel, an in-coupling element to in-couple light into the panel from the interior side of the panel, the in-coupling element being attached to the interior side of the panel and redirecting light from the light source into the panel, wherein the light source comprises a longitudinal PCB strip having a multitude of LEDs and extending adjacent to at least one light in-coupling element and such that the light emitting side of each of the LEDs is in close proximity of an in-coupling surface of the light in-coupling element, wherein the in-coupling element is made at least partly from a transparent material, and wherein the longitudinal PCB strip comprises positioning features to align the LEDs to the in-coupling surface of the light in-coupling element by means of matching positioning features provided on said light in-coupling element, and wherein at least one clamping element is provided on the panel to de-mountably attach the light source in close proximity to an in-coupling surface of the light in-coupling element.

The panel may be a glass panel, a plastic panel or a combination thereof. The panel may be a multilayer glass panel.

The light source may be a LED array arranged adjacent to an in-coupling element. The light source and/or the in-coupling element may be positioned on a top, bottom and/or side surface of the panel.

The LED array may comprise a longitudinal PCB strip having a multitude of LED's. The multitude of LEDs may comprise LEDs of a single color or multiple colors.

The in-coupling element may be any element suitable for redirecting light from the light source, or more particularly from the LEDs, into the panel. The in-coupling element may preferably be made from a transparent material such as polymethylmethacrylate (PMMA) or polycarbonate (PC). The in-coupling element may also be made from multiple parts and multiple materials and may have both transparent and opaque regions. Additionally, one or more surfaces of the in-coupling element may have a smooth surface, a rough surface or a combination of both depending on desired light projections and behavior. When made from multiple parts, the in-coupling element may comprise a PMMA or PC part for collecting the light from the light source and transfer the light into a second part of the light in-coupling element wherein the second part may also be a PMMA or PC part or may be made of an optically clear adhesive (OCA). The second part may have any suitable shape to transfer the light from the first in-coupling part into the panel. When the in-coupling element is situated on a top or bottom surface, the second part preferably has a wedge or prism shape such as a triangular, trapezoidal or parallelepiped wedge or prism-shape.

The PCB strip may comprise one or more positioning or alignment features such as cut-outs, slots, indentations, perforations, notches, or the like in the PCB matching or complimenting one or more positioning or alignment features of the light in-coupling element such as protrusions, bulges, off-set cut-outs, off-set notches, or the like. Off-set cut-outs or notches are in principle cut-outs or notches of similar size and shape as the cut-outs or notches provided on the PCB strip, but off-set in relation to the cut-outs or notches on the PCB strip in such a manner that both positioning features may interlock with each other. In that sense, the cut-outs and off-set cut-outs are intended to be complementary to one another.

Cut-outs of the PCB strip may be arranged around the periphery of the PCB strip while perforations may be distributed across the entire surface of the PCB strip. The perforations may be holes or orifices in any form or shape. The cut-outs or perforations may be shaped in the form of a logo for aesthetical purposes. When the cut-outs are arranged along one of the longitudinal sides of the PCB strip, and the light in-coupling element is provided with off-set cut-outs complimenting the PCB strip cut-outs, they may limit the movement of the PCB strip in at least a Y-direction extending parallel to said longitudinal side. Additional cut-outs and/or perforations may further limit the movement in an X-direction.

The at least one clamping element may be spring-loaded mounting clips made from metal, plastic or a combination thereof. The clamping element may also be, at least partly, rotatable. The clamping element may be arranged on the panel or onto a base surface of the in-coupling element to enable clamping or clipping of the PCB strip along the longitudinal edges of the PCB strip. When the clamping elements are arranged along both longitudinal sides of the PCB strip, they may limit the movement of the PCB strip in both an X- and a Z-direction. The clamping elements may be arranged in an asymmetrical fashion to ensure the clamping force onto the PCB strip pushes the PCB strip towards a favorable side. For instance, the PCB strip may be pushed towards the light in-coupling element due to the asymmetrical design of the clamping elements.

Alternatively, or in addition, the clamping elements may be provided as snap-fits, reusable snap rivets or the like wherein the clamping elements have an interlocking design engaging with the cut-outs or perforations in the surface of the PCB strip may engage with the clamping elements to exert a clamping force via said perforations. For instance, annular or cantilever snap-fits may engage with perforations in the surface of the PCB strip and limiting the movement of the PCB strip in any direction or combination of directions. Also, sets of clamping elements may be connected to each other to simplify assembly. For instance, a pair of clamping elements may have a connecting bridge between the elements essentially forming an H-like shape when viewed from above. Moreover, all clamping elements may be interconnected to have a single clamping structure reducing assembly complexity.

The combination of a light source comprising a LED strip with positioning features, a light in-coupling provided with matching positioning features, and the use of clamping elements allow the installation, removal, and re-installation of a light source in relation to a light in-coupling element provided on a transparent roof panel, without the use of an adhesive between the light source and the light in-coupling element, thus obtaining a serviceable LED array for a transparent vehicle roof assembly wherein accurate positioning upon servicing is achieved.

In an embodiment, the PCB strip comprises at least one cut-out and the light in-coupling element comprises off-set cut-outs matching the at least one PCB strip cut-out, thereby providing two complimenting positioning features for aligning the longitudinal PCB strip to the in-coupling surface of the light in-coupling element upon mounting the longitudinal PCB strip.

In an embodiment, the PCB strip comprises at least one perforation and wherein the in-coupling element comprises at least one protrusion. The perforation and protrusion may be provided as a stand-alone positioning feature or as an additional positioning feature to cut-outs and off-set cut-outs.

In an embodiment, the at least one clamping element comprises a spring element.

In an embodiment, the at least one clamping element is a spring-loaded clip or snap-fit made from metal, plastic or a combination thereof.

In an embodiment, the clamping element has an asymmetrical shape. The clamping element may be asymmetrical when viewed either from the top, from the side or both. For example, the clamping element when viewed from the top may be narrow on a first end and wide on a second end to allow for a lower clamping force exerted on the first end and a higher clamping force on the second end. Alternatively, when viewed from the side, the first end may have a structure allowing a force only in a Z-direction while the second end may have a structure allowing a force in both an X-direction and a Z-direction. For example, the shape and/or thickness of the clamping element may be different on either side. In another alternative, the clamping element may combine both exemplary shapes. Either way, the asymmetrical shape allows for a clamping force with a favorable direction thereby creating a pre-bias to allow the PCB strip to be pushed into a favorable X-direction.

In an embodiment, the clamping elements are fixed to the panel by means of an adhesive.

In an embodiment, the light in-coupling element comprises a base surface extending at least partly under the light source and at least partly over the at least one clamping element.

In an embodiment, the light in-coupling element is made at least partly from polymethylmethacrylate (PMMA) or polycarbonate (PC).

In an embodiment, the light source comprises a protection member providing protection against electrostatic discharges (ESD).

In an embodiment, the longitudinal PCB strip is over-molded to provide protection against electrostatic discharges. The PCB strip may be over-molded by means of injection molding a plastic material over the PCB, thereby enclosing and protecting the PCB strip. The plastic material may be a thermoplastic elastomer such as, for example, thermoplastic polyurethane (TPU).

In an embodiment, the longitudinal PCB strip is covered by a casing comprising further positioning elements to engage with the at least one clamping element. The casing may be made of polyamide (PA), polycarbonate (PC), acrylonitrile butadiene styrene (ABS) or a polycarbonate (PC) and acrylonitrile butadiene styrene (ABS) blend (PC-ABS). Additionally, the casing may comprise conductive fibers such as metal or carbon fibers for improved ESD characteristics. Furthermore, the casing may additionally be over-molded by means of injection molding a thermoplastic elastomer over the casing.

According to an aspect of the invention, a method for attaching a light source of a transparent roof panel assembly is provided wherein the method comprising the steps of:
- aligning the positioning features of the longitudinal PCB strip with the positioning features of the light in-coupling element, and
- pressing the longitudinal PCB strip towards the panel thereby engaging the light source with the at least one clamping element.

According to another aspect of the invention, a method for detaching a light source of a transparent roof panel assembly is provided wherein the at least one clamping element is removed from the light source thereby releasing the light source from the transparent roof panel assembly.

According to yet another aspect of the invention, a vehicle comprising the transparent roof panel assembly as described above is provided.

Particular embodiments of the invention are set forth in the dependent claims.

Further objects, aspects, effects and details of particular embodiments of the invention are described in the following detailed description of a number of exemplary embodiments, with reference to the drawings.

### BRIEF DESCRIPTION OF DRAWINGS

By way of example only, the embodiments of the present disclosure will be described with reference to the accompanying drawings, wherein:
FIG. 1A illustrates a top view of the light source and in-coupling element according to an aspect of the present invention
FIG. 1B illustrates a side view of an exemplary transparent roof panel assembly comprising the light source and in-coupling element at the cross-section A-A' of Fig. 1A
FIG. 1C illustrates a side view of an exemplary transparent roof panel assembly comprising the light source and in-coupling element at the cross-section B-B' of Fig. 1A
FIG. 2A illustrates a top view of the light source and in-coupling element according to an aspect of the present invention
FIG. 2B illustrates a side view of an exemplary transparent roof panel assembly comprising the light source and in-coupling element at the cross-section A-A' of Fig. 2A
FIG. 2C illustrates a side view of an exemplary transparent roof panel assembly comprising the light source and in-coupling element at the cross-section B-B' of Fig. 2A
FIG. 3A illustrates a top view of the light source and in-coupling element according to an aspect of the present invention
FIG. 3B illustrates a side view of an exemplary transparent roof panel assembly comprising the light source and in-coupling element at the cross-section A-A' of Fig. 3A
FIG. 3C illustrates a side view of an exemplary transparent roof panel assembly comprising the light source and in-coupling element at the cross-section B-B' of Fig. 3A
FIG. 4A illustrates a top view of the light source and in-coupling element according to an aspect of the present invention
FIG. 4B illustrates a side view of an exemplary transparent roof panel assembly comprising the light source and in-coupling element at the cross-section B-B' of Fig. 4A
FIG. 5A illustrates a top view of the light source and in-coupling element according to an aspect of the present invention
FIG. 5B illustrates a side view of an exemplary transparent roof panel assembly comprising the light source and in-coupling element at the cross-section A-A' of Fig. 5A
FIG. 6 illustrates a top view of the light source and in-coupling element according to an aspect of the present invention
FIG. 7 illustrates a clamping element according to an aspect of the present invention
FIG. 8A illustrates a top view of the light source and in-coupling element according to an aspect of the present invention
FIG. 8B illustrates a side view of an exemplary transparent roof panel assembly comprising the light source and in-coupling element at the cross-section B-B' of Fig. 8A

### DETAILED DESCRIPTION

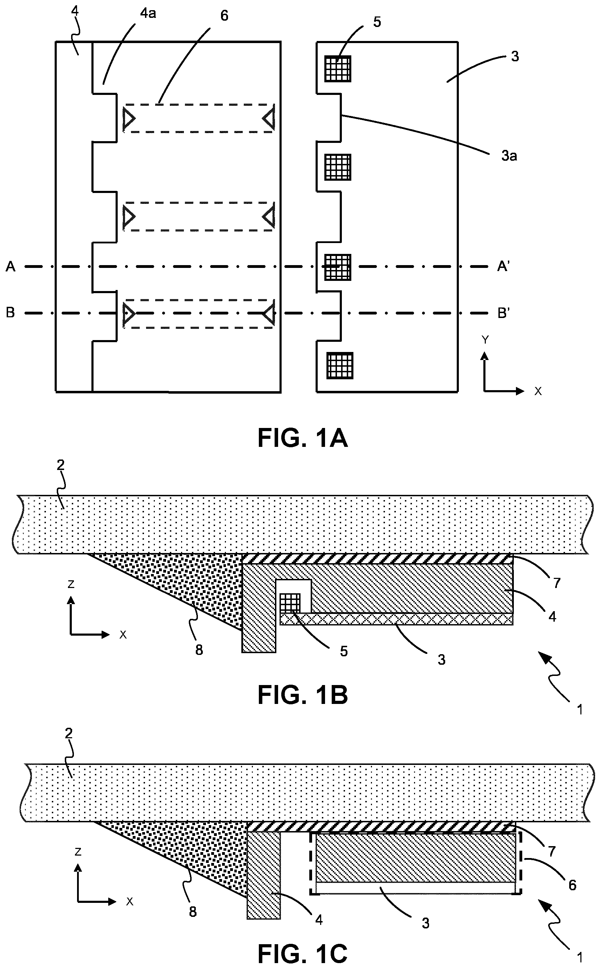

Fig. 1A illustrates a top view of a longitudinal PCB strip 3 and a complementary in-coupling element 4. The PCB strip 3 includes multiple cut-outs 3a, matching off-set cut-outs 4a of the in-coupling element 4. The cut-outs 3a and off-set cut-outs 4a all extend in the X-direction, thereby limiting the movement of the PCB strip 3 in the Y-direction when the cut-outs 3a and the off-set cut-outs 4a abut with each other. The PCB strip 3 further includes multiple LEDs 5 provided between the cut-outs 3a. The in-coupling element 4 further includes clamping elements 6 traversing, at least partly, through the in-coupling element 4 as shown in later figures. The clamping elements 6 are provided in such a manner that they do not block the LEDs 5 on the PCB.

Fig. 1B illustrates a side view of a transparent roof panel assembly 1 including a transparent panel 2, a longitudinal PCB strip 3 and an in-coupling element 4 wherein the side view of the longitudinal PCB strip 3 and the in-coupling element 4 both correspond with the cross-section A-A' indicated in Fig. 1A. The PCB strip 3 includes an LED 5. The in-coupling element 4 is attached to the transparent panel 2 by means of an adhesive 7, the adhesive 7 being any suitable adhesive such as glue or a double-sided tape. Furthermore, assembly 1 includes a wedge-shaped portion 8 to improve light in-coupling from the in-coupling element 4 into the transparent panel 2.

The LED 5 is situated on the top side or exterior facing side of the PCB strip 3, thus positioned between the PCB strip 3 and the transparent panel 2. The LED 5 may alternatively be positioned on the bottom side or interior facing side of the PCB strip 3.

The wedge-shaped portion 8 may be an integral part of the in-coupling element 4 or may be separately provided. In particular, the in-coupling element may be made from a transparent material such as PMMA or PC to allow light originating from the LED 5 to travel through the in-coupling element 4 into the transparent panel 2 wherein the in-coupling element includes the wedge-shaped portion. Alternatively, the wedge-shaped portion is formed by means of, for instance, providing an optical clear adhesive (OCA) adjacent to the in-coupling element 4. The OCA may be applied as a fluid after the in-coupling element 4 is attached to the transparent panel 2, solidifying after application of the OCA, allowing a seamless transition between the in-coupling element 4 and the wedge-shaped portion 8.

Fig. 1C illustrates another side view of the transparent roof panel assembly 1 as shown in Fig. 1B corresponding with cross-section B-B' indicated in Fig. 1A. In this particular side view, the transparent roof panel assembly 1 further includes a clamping element 6 to clamp the PCB strip 3 to limit the movement of the PCB strip 3 in both the X- direction and the Z-direction.

Clamping element 6 is provided between a base surface of the in-coupling element 4 and the adhesive 7, the base surface being the in-coupling element's 4 surface closest to the transparent panel 2. Thus, the clamping element 6 is attached to the transparent panel 2 by means of adhesive 7. The clamping element 6 traverses partly through the in-coupling element 4, meaning one side portion of the clamping element 6 is provided through hole of the in-coupling element 4 and another side portion of the clamping element 6 is provided at the side of the in-coupling element 4. The base surface of the in-coupling element 4 may additionally be recessed to accommodate for the clamping element 6, thereby creating a flush surface of the in-coupling element 4 and the clamping element 6 in contact with the adhesive 7.

Clamping element 6 may be a metallic or plastic clipping structure that snaps and hooks the PCB strip 3 into its position. Upon servicing, the metallic or plastic clips may be released by applying a suitable force onto the clipping structure, thus removing a portion of the clipping structure away from the PCB strip 3 to allow the PCB strip 3 to be removed. Upon installation or re-installation of a new or revised PCB strip 3, the PCB strip 3 may be pushed down to temporarily push the clipping structure open followed by the clipping structure snapping the PCB strip 3 again into its position.

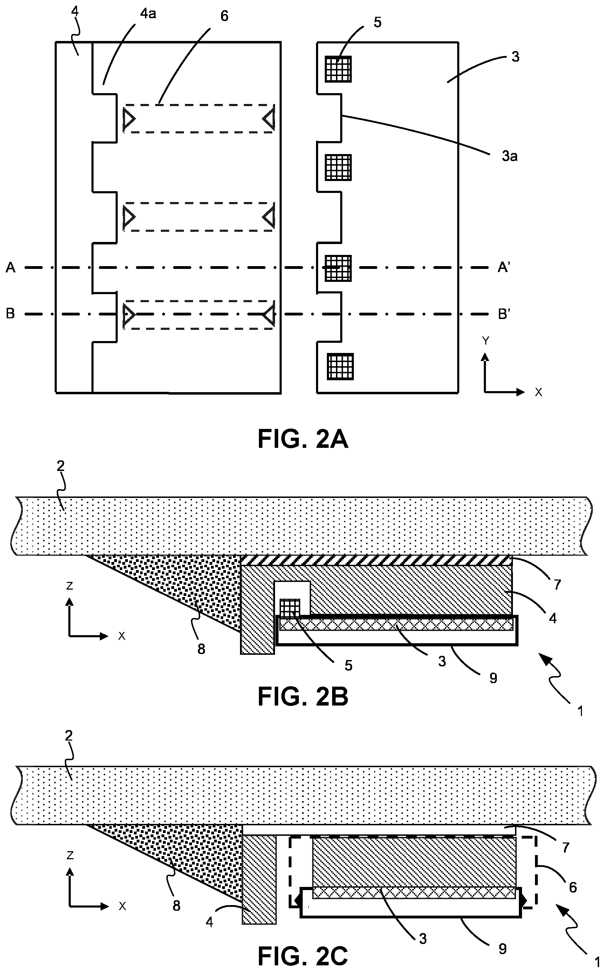

Figs. 2A to 2C show a similar PCB strip 3, in-coupling element 4 and a transparent roof panel assembly 1, respectively, as in Figs. 1A to 1C. However, in this particular example the PCB strip 3 additionally is shielded against electrostatic discharge (ESD) by means of a cover 9. The cover 9 may for instance be a conductive plastic cover, such as a polypropylene cover provided with conductive particles or traces. The cover 9 may be made of multiple parts clamping around the PCB strip 3. The cover 9 may have external protrusions or similar features to allow the clamping element 6 to interact with said protrusions or features to clamp the PCB strip 3 indirectly.

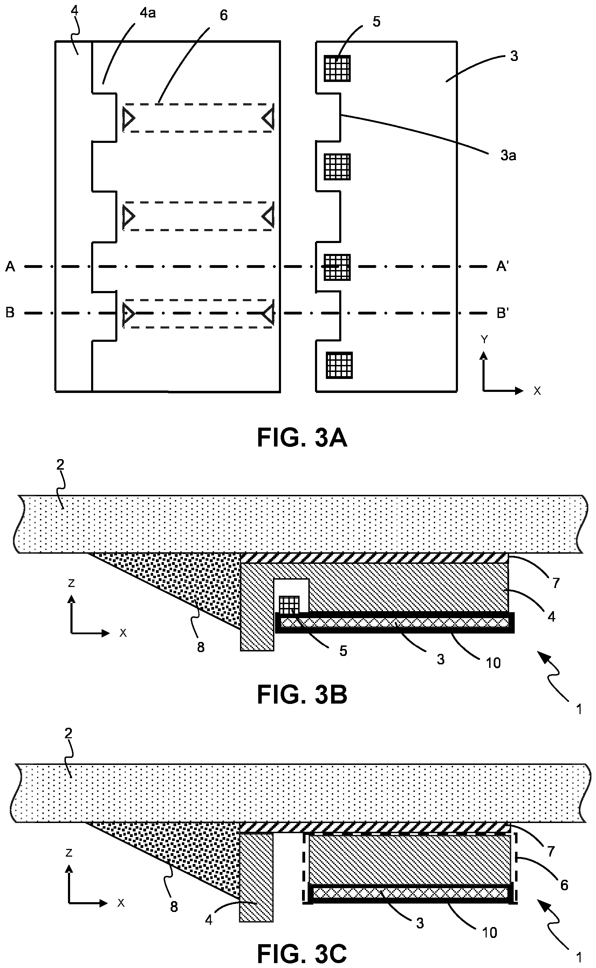

Figs. 3A to 3C show a similar PCB strip 3, in-coupling element 4 and a transparent roof panel assembly 1, respectively, as in Figs. 2A to 2C similar wherein the PCB strip 3 is shielded against ESD by means of over-mold 10 instead of a cover 9. The PCB strip 3 may be over-molded by injection molding a plastic material over the PCB strip 3, thereby enclosing and protecting the PCB strip 3.

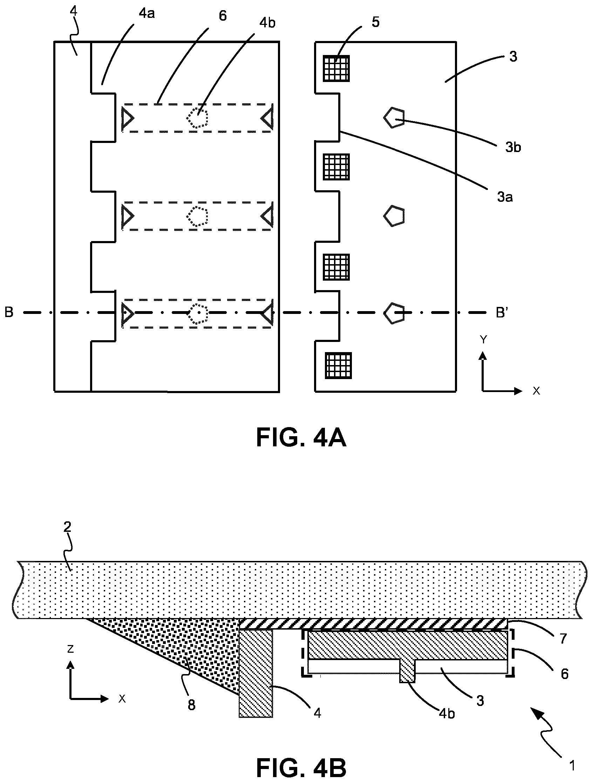

In Fig. 4A, a PCB strip 3 and in-coupling element 4 is shown similar to Fig. 1A. However, in this particular example the in-coupling element 4 includes protrusions 4b on its mating surface to match perforations 3b provided in the surface of the PCB strip 3. Upon engagement of the PCB strip 3 and the in-coupling element 4, as shown in Fig. 4B corresponding with the cross-section B-B' as indicated in Fig. 4A, the protrusion 4b protrudes through the PCB strip 3 thereby further limiting the movement of the PCB strip 3 in both X-direction and Y-direction. These additional protrusions 4b may improve the alignment of the PCB strip 3 upon installation. These protrusions 4b may have a symmetrical or an asymmetrical shape. These protrusions 4b may also, for instance, have the shape of a logo for aesthetic purposes. In case of using an ESD cover or over-mold, the protrusions 4b may extend through said cover or over-mold. In other embodiments, the mating surface of the in-coupling element 4 may be provided with recesses for receiving protrusions provided on the PCB strip 3.

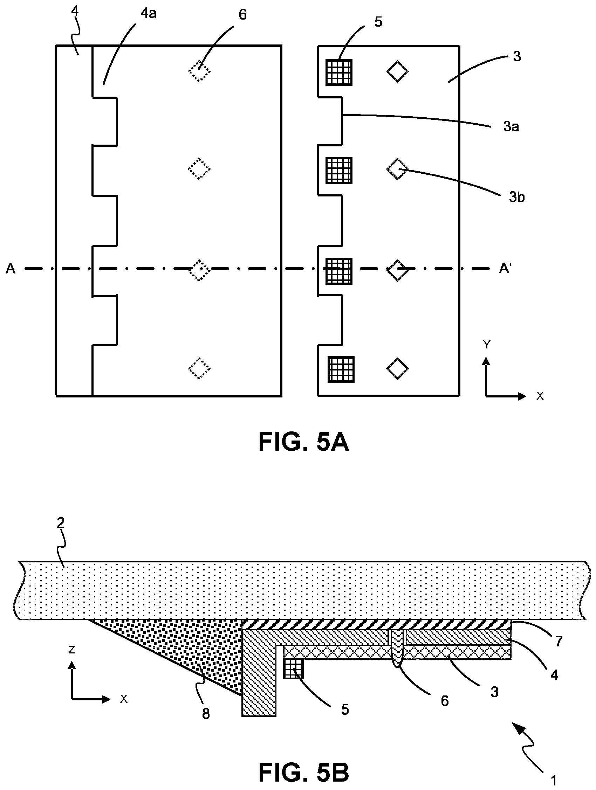

Fig. 5A shows again a PCB strip 3 and in-coupling element 4 similar to Fig. 1A. However, in this particular example the clamping element 6 may be provided as a snap-fit extending through the in-coupling element 4 and the PCB strip 3 as shown in Fig. 5B. As such, the clamping element 6 engages with the perforations 3b in the surface of the PCB strip thereby limiting the movement of the PCB strip 3 in any direction or combination of directions. This example thus combines the functionality of the clipping structure and in-coupling protrusions 4b as shown in the previous figures. They may also be used in combination with the features previously shown. In case of using an ESD cover or over-mold, the clamping element 6 may extend through said cover or over-mold.

Additionally, the LED 5 is shown as situated on the interior facing side of the PCB strip 3, allowing the height of the base of the in-coupling 4 to be smaller, as an alternative to the positioning shown in the previous figures.

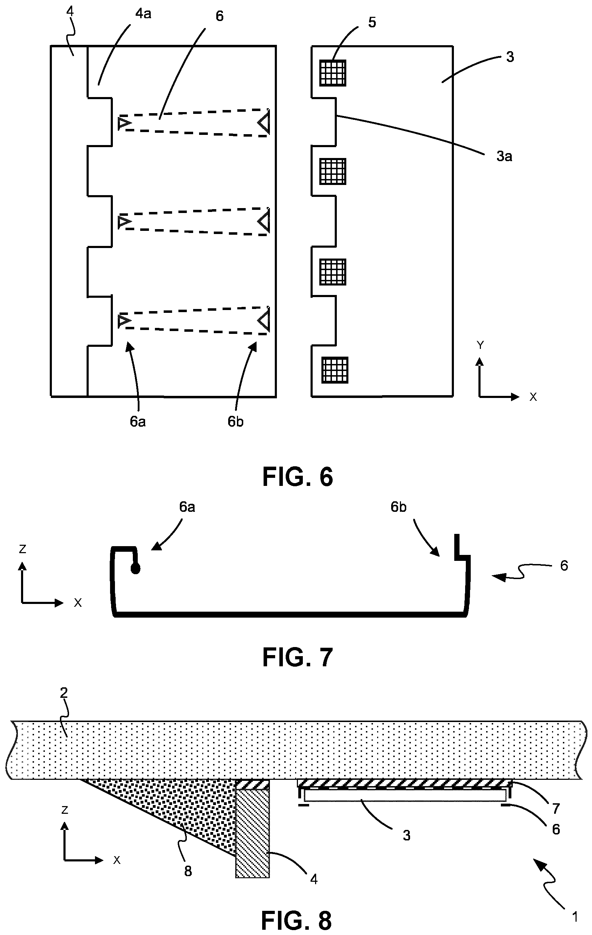

In Fig. 6, a PCB strip 3 and in-coupling element 4 similar to Fig. 1A is shown, wherein the clamping element 6 is asymmetrically shaped when viewed in the XY-plane as illustrated in Fig. 6. In particular, the clamping element 6 is narrower in a Y-direction on a first side 6a of the clamping element 6 than the second side 6b of the clamping element 6 thereby creating a pre-bias of the clamping force in such a manner that the PCB strip 3 is pushed in a predetermined X-direction. In this particular example, the PCB strip 3 is pushed towards the off-set cut-outs 4a with more force than away from the off-set cut-outs 4a.

Fig. 7 shows a side view of another exemplary clamping element 6 wherein the asymmetrical shape is realized, when viewed in the XZ-plane, by having two different clamping structures on either side. In particular, a first side 6a of the clamping element 6 includes a hook-shaped structure whereas a second side 6b includes a z-shaped structure. This may result in the first side 6a only pushing the PCB strip 3 in Z-direction while the second side 6b pushes the PCB strip 3 in both the X-direction and the Z-direction. Thus, creating a predetermined direction of the clamping force in a direction from second side 6b towards the first side 6a.

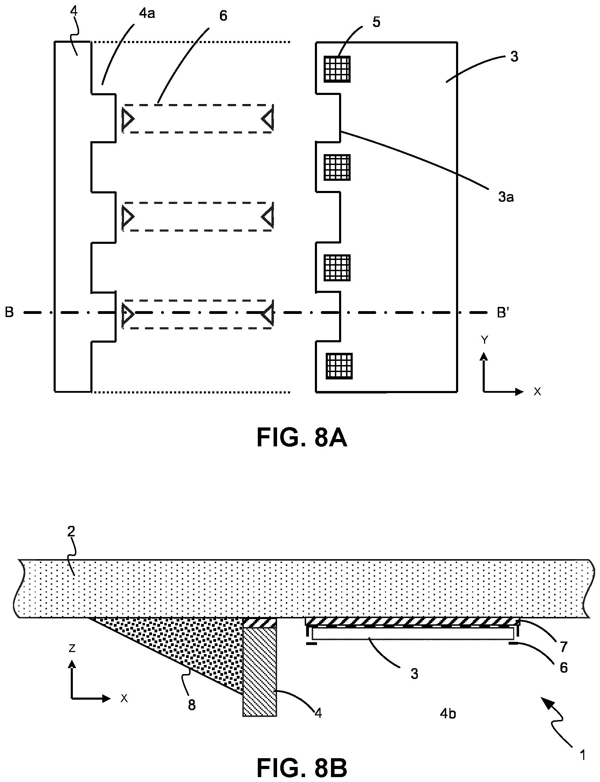

In Fig. 8A a top view of the transparent roof panel assembly 1 is shown wherein the in-coupling element 4 includes a substantially cuboid shape with off-set cut-outs 4a. As shown in Fig. 8B, corresponding with the cross-section B-B' as indicated in Fig. 8A, the PCB strip 3 is to be attached directly onto the clamping element 6 surface extending in the X-direction.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in expectedly any appropriately detailed structure. In particular, features presented and described in separate de-pendent claims may be applied in combination and any advantageous combination of such claims are herewith disclosed.

Further, it is contemplated that structural elements may be generated by application of three-dimensional (3D) printing techniques. Therefore, any reference to a structural element is in-tended to encompass any computer executable instructions that in-struct a computer to generate such a structural element by three-dimensional printing techniques or similar computer-controlled manufacturing techniques. Furthermore, any such reference to a structural element is also intended to encompass a computer readable medium carrying such computer executable instructions.

Further, the terms and phrases used herein are not intended to be limiting, but rather to provide an understandable description of the invention. The terms "a" or "an", as used herein, are defined as one or more than one. The term plurality, as used here-in, is defined as two or more than two. The term another, as used herein, is defined as at least a second or more. The terms including and/or having, as used herein, are defined as comprising (i.e., open language). The term coupled, as used herein, is de-fined as connected, although not necessarily directly.

Although the present invention has been described above with reference to specific embodiments, it is not intended to be limited to the specific form set forth herein. Rather, the invention is limited only by the accompanying claims and other embodiments than the specific above are equally possible within the scope of these appended claims.

Furthermore, although exemplary embodiments have been described above in some exemplary combination of components and/or functions, it should be appreciated that, alternative embodiments may be provided by different combinations of members and/or functions without departing from the scope of the present disclosure. In addition, it is specifically contemplated that a particular feature described, either individually or as part of an embodiment, can be combined with other individually described features, or parts of other embodiments.

## Claims

1. A transparent roof panel assembly (1) for a vehicle roof, the roof panel assembly (1) comprising:
- a panel (2) having a transparent area, the panel being configured to be arranged over an opening in the vehicle roof to allow visible light to pass through the transparent area between an exterior of the vehicle and an interior of the vehicle;
- a light source (3, 5) arranged for providing light into the panel (2);
- an in-coupling element (4) to in-couple light into the panel from the interior side of the panel (2), the in-coupling element (4) being attached to the interior side of the panel (2) and redirecting light from the light source (3, 5) into the panel (2);
wherein the light source (3, 5) comprises a longitudinal PCB strip (3) having a multitude of LEDs (5) and extending adjacent to at least one light in-coupling element (4) and such that the light emitting side of each of the LEDs (5) is in close proximity of an in-coupling surface of the light in-coupling element (4), wherein the in-coupling element (4) is made at least partly from a transparent material, and wherein the longitudinal PCB strip (3) comprises positioning features (3a) to align the LEDs to the in-coupling surface of the light in-coupling element (4) by means of matching positioning features (4a) provided on said light in-coupling element (4), **characterized in that**,
at least one clamping element (6) is provided on the panel to de-mountably attach the light source (3, 5) in close proximity to an in-coupling surface of the light in-coupling element (4).

2. The transparent roof panel assembly (1) according to claim 1, wherein the PCB strip (3) comprises at least one cut-out (3a) and the light in-coupling element comprises off-set cut-outs (4a) matching the at least one PCB strip cut-out (3a), thereby providing two complimenting positioning features for aligning the longitudinal PCB strip (3) to the in-coupling surface of the light in-coupling element (4) upon mounting the longitudinal PCB strip (3).

3. The transparent roof panel assembly (1) according to claim 1 or 2, wherein the PCB strip (3) comprises at least one perforation (3b) and wherein the in-coupling element comprises at least one protrusion (4b).

4. The transparent roof panel assembly (1) according to any of the preceding claims, wherein the at least one clamping element (6) comprises a spring element.

5. The transparent roof panel assembly (1) according to claim 4, wherein the at least one clamping element (6) is a spring-loaded clip or snap-fit made from metal, plastic or a combination thereof.

6. The transparent roof panel assembly (1) according to claim 4 or 5, wherein the clamping element (6) has an asymmetrical shape.

7. The transparent roof panel assembly (1) according to any of the claims 4 to 6, wherein the clamping elements (6) are fixed to the panel (2) by means of an adhesive (7).

8. The transparent roof panel assembly (1) according to any of the preceding claims, wherein the light in-coupling element (4) comprises a base surface extending at least partly under the light source (3, 5) and at least partly over the at least one clamping element (6).

9. The transparent roof panel assembly (1) according to any of the preceding claims, wherein the light in-coupling element (4) is made at least partly from PMMA or PC.

10. The transparent roof panel assembly (1) according to any of the preceding claims, wherein the light source (3, 5) comprises a protection member providing protection against electrostatic discharges (ESD).

11. The transparent roof panel assembly (1) according to claim 10, wherein the longitudinal PCB strip (3) is over-molded (10) to provide protection against electrostatic discharges.

12. The transparent roof panel assembly (1) according to claim 10, wherein the longitudinal PCB strip (3) is covered by a casing (9) comprising further positioning elements to engage with the at least one clamping element (6).

13. A method for attaching a light source (3, 5) of a transparent roof panel assembly (1) according to any of the preceding claims, the method comprising the steps of:
- aligning the positioning features (3a) of the longitudinal PCB strip (3) with the positioning features (4a) of the light in-coupling element (4); and
- pressing the longitudinal PCB strip (3) towards the panel (2) thereby engaging the light source (3, 5)with the at least one clamping element (6).

14. A method for detaching a light source (3, 5) of a transparent roof panel assembly (1) according to any of claims 1 to 12 by removing the at least one clamping element (6) from the light source (3, 5) thereby releasing the light source (3, 5) from the transparent roof panel assembly (1).

15. A vehicle comprising the transparent roof panel assembly (1) according to any of claims 1 to 12.
